(19) Europäisches Patentamt / European Patent Office / Office européen des brevets

(11) **EP 2 980 256 B1**

(12) **EUROPEAN PATENT SPECIFICATION**

(45) Date of publication and mention of the grant of the patent:
**29.07.2020 Bulletin 2020/31**

(21) Application number: **14776517.6**

(22) Date of filing: **26.03.2014**

(51) Int Cl.:
*C22C 38/04* (2006.01)    *C21D 6/00* (2006.01)
*C21D 8/02* (2006.01)    *C21D 9/46* (2006.01)
*C21D 1/60* (2006.01)    *C22C 38/00* (2006.01)
*C22C 38/02* (2006.01)    *C22C 38/06* (2006.01)
*C22C 38/08* (2006.01)    *C22C 38/12* (2006.01)
*C22C 38/14* (2006.01)    *C22C 38/22* (2006.01)
*C22C 38/24* (2006.01)    *C22C 38/26* (2006.01)
*C22C 38/28* (2006.01)    *C22C 38/32* (2006.01)
*C22C 38/44* (2006.01)    *C22C 38/46* (2006.01)
*C22C 38/48* (2006.01)    *C22C 38/50* (2006.01)
*C22C 38/54* (2006.01)

(86) International application number:
**PCT/CN2014/074100**

(87) International publication number:
**WO 2014/154140 (02.10.2014 Gazette 2014/40)**

(54) **LOW-ALLOY HIGH-PERFORMANCE WEAR-RESISTANT STEEL PLATE AND MANUFACTURING METHOD THEREFOR**

LEISTUNGSSTARKE NIEDRIGLEGIERTER VERSCHLEISSFESTE STAHLPLATTE UND HERSTELLUNGSVERFAHREN DAFÜR

TÔLE D'ACIER HAUTE PERFORMANCE, RÉSISTANT À L'USURE ET FAIBLEMENT ALLIÉ ET PROCÉDÉ DE FABRICATION DE CETTE DERNIÈRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.03.2013 CN 201310105169**

(43) Date of publication of application:
**03.02.2016 Bulletin 2016/05**

(73) Proprietor: **Baoshan Iron & Steel Co., Ltd.**
**Shanghai 201900 (CN)**

(72) Inventors:
• **LI, Hongbin**
**Shanghai 201900 (CN)**
• **YAO, Liandeng**
**Shanghai 201900 (CN)**
• **WANG, Xiaobo**
**Shanghai 201900 (CN)**

(74) Representative: **WSL Patentanwälte Partnerschaft mbB**
**Kaiser-Friedrich-Ring 98**
**65185 Wiesbaden (DE)**

(56) References cited:
**CN-A- 101 638 755    CN-A- 102 747 280**
**CN-A- 102 876 969    CN-A- 102 876 969**
**CN-A- 103 205 627    JP-A- 2009 030 094**
**JP-A- 2012 036 501**

## Description

### TECHNICAL FIELD

The present invention relates to wear-resistant steel and particularly, to a high-performance low-alloy wear-resistant steel sheet and a method of manufacturing the same, which steel plate has the typical mechanical properties: a tensile strength of 1450MPa to 1800 MPa, an elongation rate of more than 11%, Brinell Hardness of more than 450HB, and -40°C Charpy V-notch longitudinal impact energy of more than 50J.

### BACKGROUND

Wear-resistant steel sheets are widely applied on mechanical products in the field of projects with very serious operational conditions and requiring high strength and high wear-resistance, mining, agriculture, cement production, harbor, electrical power and metallurgy, such as earth mover, loading machine, excavator, dumper, grab bucket, stack-reclaimer, delivery bending structure, etc..

Traditionally, austenitic high-manganese steel is usually selected to manufacture the wear-resistant parts. Under the effect of large impact load, austenitic high-manganese steel may be strained to induce martensite phase transfomation so as to improve the wear resistance thereof. Austenitic high-manganese steel are not suitable for wide application owing to the limitation of high alloy content, bad machining and welding performance, and low original hardness.

In the past decades, rapid development takes place in the exploitation and application of wear-resistant steel. It is usually produced by adding a moderate amount of carbon and alloy elements and through casting, rolling and offline heat treatment, etc. The casting way has the advantages of short work flow, simple process and easy production, but has the disadvantages of excessive alloy content, bad mechanical, welding and machining performances; the rolling way may further reduce the content of the alloy elements, and improve the performance of products thereof, but yet inappropriate for wide application; the heat treatments of offline quenching plus tempering are the main way of producing wear-resistant steel sheet, and the produced wear-resistant steel sheet has low alloy elements, and high performance and can make the industrial production stable. But with the higher requirements on low carbon, energy conservation, and environmental protection, products with low cost, short work flow and high performance, become the inevitable trend in the development of iron and steel industry.

China Patent CN1140205A discloses a wear-resistant steel with medium and high carbon and medium alloy, that is produced by casting, and has high contents of carbon and alloy elements (Cr, Mo, etc.), which results inevitably in bad welding and machining performance.

China Patent CN1865481A discloses a Bainite wear-resistant steel which has high contents of carbon and alloy elements (Si, Mn, Cr, Mo, etc.), thereby being of poor welding performance; and which is produced by air cooling after rolling or by stack cooling, thereby being of low mechanical properties.

Japanese patent application JP 2012 036501 A relates to a high-tensile strength steel sheet comprising, in weight percentage, 0.10-0.25% C, 0.05-1.5% Si, 0.5-2.0% Mn, 0.3-2.2% Cr, 0.2-1.4% Mo, 0.001-0.024% V, 0.005-0.1 % Al, 0.0005-0.006% N, ≤0.02% P, ≤0.005% S, and 0.0003-0.003% B, wherein $0.60 \leq [\% \text{ Cr}]+0.6[\% \text{ Mo}]-9.5[\% \text{ V}] \leq 1.30$ and the balance Fe with inevitable impurities. The high-tensile strength steel sheet has a steel structure, wherein martensite structure has a volume fraction of ≥95%, and the average grain diameter of restained austenite grains is ≤20 $\mu$m, in the martensite structure, and has a tensile strength of ≥1,150 MPa.

Japanese patent application JP 2009 030094 A relates to a steel sheet with a chemical composition containing one or more kinds selected from specified amounts of C, Si, Mn, Nb, Ti, B, Al, P, S, Cu, Ni, Cr, Mo, V and W, and, if required, further comprising one or two kinds selected from Ca and REM, and in which $Ceq^*(=C+Mn/6+(Cu+Ni)/15+(Cr+Mo+V)/5+W/10)$ is ≤ 0.55% and $DI^*(=33.85^*(0.1^*C)0.5^*(0.7^*Si+1)^*(3.33^*Mn+1)^*(0.35^*Cu+1)^*(0.36^*Ni+1)^*(2.16^*Cr+1)^*(3^*M0+1)^* (1.75^*V+1)^*(1.5^*W+1))$ is ≥45, and the balance Fe with inevitable impurities, and containing a base phase composed of martensite with the restained austenite grain size of ≤30 $\mu$m, and whose surface hardness is ≥400HBW10/3000 by Brinell hardness.

Chinese patent application CN 102 876 969 A relates to a wear resistant steel plate, comprising the following chemical components (wt%): 0.22-0.35% of C, 0.10-0.40% of Si, 0.60-1.35% of Mn, not more than 0.015% of P, not more than 0.010% of S, 0.010-0.040% of Nb, 0.010-0.080% of Al, 0.0006-0.0014% of B, 0.005-0.050% of Ti, 0.0010-0.0080 wt% of Ca, not more than 0.080% of V, not more than 0.60% of Cr, not more than 1.00 wt% of W, not more than 0.0080% N, not more than 0.0060% of O, not more than 0.0004% of H and the balance of Fe and inevitable impurities, wherein Nb+Ti is not less than 0.025% and not more than 0.080%, and Al+Ti is not less than 0.030% and not more than 0.12%. The production method of the wear resistant steel plate comprises the steps of smelting, casting, rolling and directly cooling after rolling. The wear resistant steel plate obtained through the components and the process has the advantages of high intensity, good low temperature toughness, and excellent mechanical processing performance, and is suitable for easily abrasive devices in engineering and mine machinery, such as a grab bucket, a scraper conveyer and the like. Chinese patent application CN 102 747 280 relates to a wear resistant steel plate, and is characterized by comprising the following chemical components (wt%): 0.08-0.21% of C, 0.15-0.45% of Si, 1.10-1.80 of Mn, not more than 0.015% of P, not more than 0.010% of S, 0.010-0.040% of Nb, 0.010-0.080% of Al, 0.0006-0.0014% of B, 0.005-0.050% of Ti, 0.0010-0.0080% of Ca, not more than 0.080% of V, not more than 0.60% of Cr, not more than 0.0080% of N, not more than 0.0060% of O and more than 0.0004% of H, wherein Nb+Ti is not less than 0.025% and not more than 0.080%, Al+Ti is not less than 0.030% and not more than 0.12%, and the balance is Fe and inevitable impurities. A production method of the wear resistant steel plate comprises steps of smelting, casting, rolling and directly cooling after rolling. The wear resistant steel plate with abovementioned components obtained by the process has the advantages of easy welding, high strong hardness, excellent low-temperature toughness and excellent mechanical processing performance, and is suitable for easily wearable devices in engineering and mine machines, such as buckets, mining vehicle cases, scraper conveyers and the like.

## SUMMARY

The objective of the present invention is to provide a high-performance low-alloy wear-resistant steel sheet and a method of manufacturing the same, which steel plate has the typical mechanical properties: a tensile strength of 1450MPa to 1800 MPa, an elongation rate of more than 11%, Brinell Hardness of more than 450HB, and -40°C Charpy V-notch longitudinal impact energy of more than 50J. It matches the high strength, high hardness and high toughness, and has good machining performance, thereby very beneficial to the wide application on projects.

To achieve the above-mentioned objective, the present invention takes the technical solution according to claims 1 and 8.

The respective functionalities of the chemical compositions of the high-performance low-alloy wear-resistant steel sheet according to the present invention are as follows:

Carbon: carbon is the most basic and important element in the wear-resistant steel, that can improve the strength and hardness of the steel, and thus further improve the wear resistance thereof. However it is not good for the toughness and welding performance of the steel. Accordingly, the carbon content in the steel should be controlled between 0.21-0.32wt%, preferably, between 0.21-0.30wt%.

Silicon: silicon is subjected to solid solution in ferrite and austenite, to improve their hardness and strength, but excessive silicon may result in sharply decreasing the toughness of the steel. Simultaneously, due to that the affinity between silicon and oxygen is better than that between the silicon and Fe, it is easy to generate silicates with low melting point during welding, and increase the flowability of slag and melted metals, thereby affecting the quality of welding seams. Hence its content should not be too much. The silicon content in the wear-resistant steel of the present invention should be controlled between 0.10-0.50 wt%, preferably, between 0.10-0.40 wt%.

Manganese: manganese improves sharply the hardenability of the steel, and reduces the transformation temperature and critical cooling speed thereof. However, when the content of manganese is too high, it may have a grain coarsening tendency, increasing the susceptibility to tempering embrittleness and prone to causing segregation and cracks of casting blanks, thus lowering the performance of the steel sheet. The manganese content in the wear-resistant steel of the present invention should be controlled between 0.60-1.60wt%, preferably, between 0.60-1.50wt%.

Boron: boron can improve the hardenability of steel, but excessive boron may result in hot shortness, and affect the welding performance and hot machining performance. Consequently, it is necessary to control the content of B. The content of B in the wear-resistant steel is controlled between 0.0005-0.0040wt%, preferably, between 0.0005-0.0020 wt%.

Chromium: chromium can decrease the critical cooling speed and improve the hardenability of the steel. Chromium may form multiple kinds of carbides such as $(Fe,Cr)_3C$, $(Fe,Cr)_7C_3$ and $(Fe,Cr)_{23}C_7$, that can improve the strength and hardness. During tempering, chromium can prevent or retard the precipitation and aggregation of carbide, and improve the temper stability. The chromium content in the wear-resistant steel of the present invention should be controlled less than or equal to 1.50wt%, preferably, between 0.10-1.20%.

Molybdenum: molybdenum can refine grains and improve the strength and toughness. Molybdenum exists in the sosoloid phase and carbide phase of the steel, hence, the steel containing molybdenum has effects of solid solution and carbide dispersion strengthening. Molybdenum is the element that can reduce the temper brittleness, with improving the temper stability. The molybdenum content in the wear-resistant steel of the present invention should be controlled less than or equal to 0.80wt%, preferably less than or equal to 0.60%wt%.

Nickel: nickel can reduce the critical cooling speed, and improve the hardenability. Nickel is mutually soluble with ferrum in any ratio, and improves the low-temperature toughness of the steel through refining the ferrite grains, and has the effect of obviously decreasing the cold shortness transformation temperature. For the high level wear-resistant steel with high low-temperature toughness, nickel is a very beneficial additive element. However, excessive nickel may lead to the difficulty of descaling on the surface of the steel sheet and remarkably increase cost, whereby its content should be controlled. The nickel content in the wear-resistant steel of the present invention should be controlled less than or equal to 1.50wt%, preferably less than or equal to 1.20wt%.

Niobium: the effects of refining grains and precipitation strengthening of niobium contribute notably to the obdurability of the material, and Nb is the strong former of carbide and nitride which can strongly restrict the growth of austenite grains. Nb improves or enhances the performance of the steel mainly through precipitation strengthening and phase transformation strengthening, and it has been considered as one of the most effective hardening agent in the HSLA steel. The niobium content in the wear-resistant steel of the present invention should be controlled less than or equal to 0.080wt%, preferably between 0.005-0.080wt%.

Vanadium: the addition of vanadium is to refine grains, to make the austenite grains free from too coarsening during heating the steel blank. Thus, during the subsequent multi-pass rolling, the steel grains can be further refined and the strength and toughness of the steel is improved. The vanadium content in the wear-resistant steel of the present invention should be controlled less than or equal to 0.080wt%, preferably less than or equal to 0.060wt%.

Aluminum: aluminum and nitrogen in the steel may form fine and indissolvable AlN particles, which can refine the grains in the steel. Aluminum can refine the grains in the steel, stabilify nitrogen and oxygen in the steel, alleviate the susceptibility of the steel to the notch, reduce or eliminate the ageing effect and improve the toughness thereof. The content of Al in the wear-resistant steel is controlled between 0.010-0.080wt%, preferably, between 0.020-0.080wt%.

Titanium: titanium is one of the formers of strong carbide, and forms fine TiC particles together with carbon. TiC particles are fine, and distributed along the grain boundary, that can reach the effect of refining grains. Harder TiC particles can improve the wear resistance of the steel. The content of titanium in the wear-resistant steel is controlled less than or equal to 0.060wt%, preferably, between 0.005-0.060wt%.

Aluminum and titanium: titanium can form fine particles and further refine grains, while aluminum can ensure the formation of fine Ti particles and allow full play of titanium to refine grains. Accordingly, the range of the total content of aluminum plus titanium should be controlled more than or equal to 0.010% and less than or equal to 0.13%, preferably, more than or equal to 0.01% and less than or equal to 0.12%.

Calcium: calcium contributes remarkably to the deterioration of the inclusions in the cast steel, and the addition of an appropriate amount of calcium in the cast steel may transform the strip like sulfide inclusions into spherical CaS or (Ca, Mn) S inclusions. The oxide and sulfide inclusions formed by calcium have low density and tend to float and to be removed. Calcium also reduces the segregation of sulfide at the grain boundary notably. All of those are beneficial to improve the quality of the cast steel, and further improve the performance thereof. The content of calcium in the wear-resistant steel is controlled between 0.0010-0.0080wt%, preferably, between 0.0010-0.0060wt%.

Phosphorus and sulphur: both phosphorus and sulphur are harmful elements in the wear-resistant steel, and the content thereof should be controlled strictly. The content of phosphorus in the steel of the present invention is controlled less than or equal to 0.015wt%, preferably less than or equal to 0.012wt%; the content of sulphur therein controlled less than or equal to 0.010wt%, preferably less than or equal to 0.005wt%.

Nitrogen, oxygen and hydrogen: excessive nitrogen, oxygen and hydrogen in the steel is harmful to the performances such as welding performance, impact toughness and crack resistance, and may reduce the quality and lifetime of the steel sheet. But too strict controlling may substantially increase the production cost. Accordingly, the content of nitrogen in the steel of the present invention is controlled less than or equal to 0.0080wt%, preferably less than or equal to 0.0050wt%; the content of oxygen therein controlled less than or equal to 0.0080wt%, preferably less than or equal to 0.0050wt%; the content of hydrogen therein controlled less than or equal to 0.0004wt%, preferably less than or equal to 0.0003wt%.

The steel related in the present invention matches high strength, high hardness and high toughness on basis of adding micro-alloy elements through scientific design on the element types and contents. The steel has a tensile strength of 1450MPa to 1800 MPa, an elongation rate of more than 11%, Brinell Hardness of more than 450HB, and -40°C Charpy V-notch longitudinal impact energy of more than 50J.

In the method of manufacturing the high-performance low-alloy wear-resistant steel sheet, the steel sheet can be obtained through stages of smelting as the aforementioned proportions of the chemical compositions, casting, heating, rolling and cooling directly after rolling; wherein in the heating stage, the slab heating temperature is 1000-1200°C, and the heat preservation time is 1-3 hours; in the stage of rolling, the rough rolling temperature is 900-1150°C, while the finish rolling temperature is 780-880°C; in the stage of cooling, the steel is water cooled to below 400°C, then air cooled to the ambient temperature, wherein the speed of water cooling is more than or equal to 20°C/s.

Furthermore, the stage of cooling directly after rolling further includes a stage of tempering, in which the heating temperature is 100-400°C, and the heat preservation time is 30-120min.

Preferably, during the heating process, the heating temperature is 1000-1150°C; more preferably the heating temperature is 1000-1130°C; and most preferably, the heating temperature is 1000-1110°C for improving the production efficiency, and preventing the austenite grains from overgrowth and the surface of the billet from strongly oxidizing.

Preferably, during the stage of rolling, the rough rolling temperature is 900-1100°C, and the reduction rate in the stage of rough rolling is more than 20%, while the finish rolling temperature is 780-860°C, and the reduction rate in the stage of finish rolling is more than 40%; more preferably, the rough rolling temperature is 900-1080°C, and the reduction rate in the stage of rough rolling is more than 25%, while the finish rolling temperature is 780-855°C, and the reduction rate in the stage of finish rolling is more than 45%; most preferably, the rough rolling temperature is 910-1080°C, and the reduction rate in the stage of rough rolling is more than 28%, while the finish rolling temperature is 785-855°C, and the reduction rate in the stage of finish rolling is more than 50%.

Preferably, in the stage of cooling, the cease cooling temperature is below 380°C, the water cooling speed is more than or equal to 23°C/s; more preferably, the cease cooling temperature is below 350°C, the water cooling speed is more than or equal to 27°C/s; most preferably, the cease cooling temperature is below 330°C, and the water cooling speed is more than or equal to 30°C/s.

Preferably, in the stage of tempering, the heating temperature is 100-380°C, and the heat preservation time is 30-100min; more preferably, the heating temperature is 120-380°C, the heat preservation time is 30-100min; most preferably, the heating temperature is 150-380°C, the heat preservation time is 30-100min.

Due to the scientifically designed contents of carbon and alloy elements in the high-performance low-alloy wear-resistant steel sheet of the present invention, and through the refinement strengthening effects of the alloy elements and controlling the rolling and cooling process for structural refinement and strengthening, the obtained wear-resistant steel sheet has high performances such as high hardness, high strength, high elongation rate, and good impact toughness etc., excellent wear resistance, and is easy to be machined such as cut, bended, thereby having high applicability.

The differences between the present invention and the prior art are embodied in the following aspects:

1. regarding the chemical compositions, the wear-resistant steel sheet of the present invention gives priority to medium-low carbon and low alloy, and makes full use of the characteristics of refinement and strengthening of the micro-alloy elements such as Nb, Ti or the like, reducing the contents of carbon and alloy elements such as Cr, Mo, and Ni, and ensuring the good mechanical properties and excellent welding performance of the wear-resistant steel sheet.

2. regarding the production process, the wear-resistant steel sheet of the present invention is produced by TMCP process, and through controlling the process parameters such as start rolling and finish rolling temperatures, rolling deformation amount, and cooling speed in the TMCP process, the structure refinement and strengthening effects are achieved, and further the contents of carbon and alloy elements are reduced, thereby obtaining the steel sheet with excellent mechanical properties and welding performance, etc. Moreover, the process has the characteristics of short work flow, high efficiency, energy conservation and low cost etc.

3. regarding the performance of the products, the wear-resistant steel sheet of the present invention has the advantages such as high strength, high hardness, high low-temperature toughness (typical mechanical properties thereof: a tensile strength of 1450 MPa to 1800 MPa, an elongation rate of more than 11%, Brinell Hardness of more than 450HB, and -40°C Charpy V-notch longitudinal impact energy of more than 50J), and has good welding performance.

4. regarding the micro-structure, the wear-resistant steel sheet of the present invention makes full use of the addition of the alloy elements and the controlled rolling and controlled cooling processes to obtain fine martensite structures and retained austenite (wherein the volume fraction of the retained austenite is less than or equal to 5%), which are beneficial for matching nicely the strength, hardness and toughness of the wear-resistant steel sheet.

In sum, the wear-resistant steel sheet of the present invention has apparent advantages, and owing to being obtained by controlling the content of carbon and alloy elements and the controlled rolling and controlled cooling, it is of low cost, high strength and hardness, good low-temperature toughness, excellent machining performance, high weldability, and applicable for a variety of vulnerable parts mechanical equipments, whereby this kind of wear-resistant steel sheet is the natural tendency of the development of the social economy and iron-steel industries.

**BRIEF DESCRIPTION OF THE DRAWINGS**

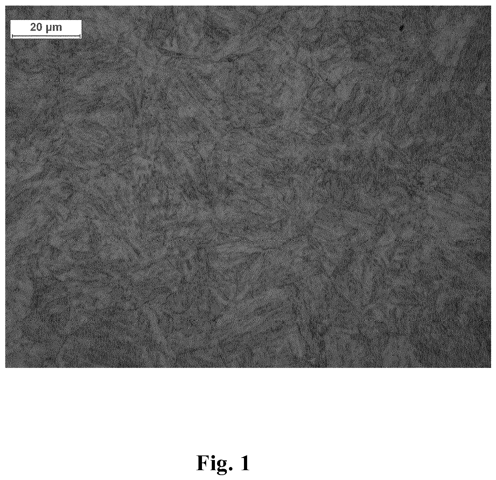

Figure 1 is a photograph of the microstructure of the steel sheet in Embodiment 6 according to the present invention.

**DETAILED DESCRIPTION**

Hereinafter the technical solution of the present invention will be further set out in conjunction with the detailed embodiments. It should be specified that those embodiments are only used for describing the detailed implements of the present invention, but not for constituting any limitation on the protection scope thereof.

Table 1 shows the chemical compositions in weight percentage of the wear-resistant steel sheet in Embodiments 1-10 and the steel sheet in the contrastive example 1 (which is an embodiment in the patent CN1865481A). The method of manufacturing them is: the respective smelt raw materials are treated in the following stages: smelting - casting ---

**EP 2 980 256 B1**

heating --- rolling --- cooling directly after rollingtempering (not necessary), and the chemical elements in weight percentage are controlled, wherein, in the stage of heating, the slab heating temperature is 1000-1200°C, and the hear preservation time is 1-3 hours; in the stage of rolling, the rough rolling temperature is 900-1150°C, while the finish rolling temperature is 780-880°C; in the stage of cooling, the steel is water cooled to below 400°C, then air cooled to the ambient temperature, wherein the speed of water cooling is more than or equal to 20°C/s; in the stage of tempering, the heating temperature is 100-400°C, and the heat preservation time is 30-120 min. The specific process parameters in Embodiments 1-10 are shown in Table 2.

6

Table 1 Chemical Compositions in Embodiments 1-10 and in Contrastive Example 1 (unit: wt%)

| | C | Si | Mn | P | S | Cr | Mo | Ni | Nb | V | Ti | Al | B | Ca | N | O | H |
|---|---|---|---|---|---|---|---|---|---|---|---|---|---|---|---|---|---|
| Embodiment 1 | 0.21 | 0.50 | 1.25 | 0.01 0 | 0.00 5 | 0.60 | 0.33 | / | 0.01 6 | / | 0.019 | 0.027 | 0.0012 | 0.003 0 | 0.004 2 | 0.006 0 | 0.000 4 |
| Embodiment 2 | 0.23 | 0.26 | 1.50 | 0.00 9 | 0.01 0 | / | 0.28 | 0.35 | 0.02 0 | 0.08 0 | 0.005 | 0.035 | 0.0005 | 0.002 0 | 0.008 0 | 0.004 0 | 0.000 2 |
| Embodiment 3 | 0.24 | 0.40 | 1.33 | 0.01 5 | 0.00 4 | 0.22 | / | / | 0.02 6 | / | / | 0.010 | 0.0013 | 0.008 0 | 0.005 0 | 0.002 8 | 0.000 2 |
| Embodiment 4 | 0.25 | 0.37 | 1.23 | 0.00 8 | 0.00 3 | 0.62 | 0.26 | / | / | / | 0.022 | 0.020 | 0.0015 | 0.006 0 | 0.002 8 | 0.002 1 | 0.000 3 |
| Embodiment 5 | 0.27 | 0.31 | 1.15 | 0.00 8 | 0.00 3 | 0.28 | / | 0.40 | 0.02 1 | / | 0.040 | 0.080 | 0.0019 | 0.001 0 | 0.003 8 | 0.003 0 | 0.000 3 |
| Embodiment 6 | 0.28 | 0.19 | 1.05 | 0.01 0 | 0.00 4 | 0.38 | 0.45 | / | 0.03 5 | / | 0.010 | 0.052 | 0.0020 | 0.003 0 | 0.002 9 | 0.002 8 | 0.000 2 |
| Embodiment 7 | 0.29 | 0.28 | 0.88 | 0.00 9 | 0.00 3 | / | / | / | 0.01 8 | / | 0.032 | 0.060 | 0.0017 | 0.002 0 | 0.003 5 | 0.002 2 | 0.000 2 |
| Embodiment 8 | 0.30 | 0.22 | 0.93 | 0.00 8 | 0.00 2 | 0.72 | 0.60 | / | 0.04 0 | / | 0.050 | 0.041 | 0.0015 | 0.004 0 | 0.003 2 | 0.001 8 | 0.000 2 |
| Embodiment 9 | 0.31 | 0.28 | 0.78 | 0.00 9 | 0.00 3 | 1.00 | 0.80 | / | 0.02 8 | / | 0.023 | 0.032 | 0.0018 | 0.002 0 | 0.005 3 | 0.003 8 | 0.000 3 |
| Embodiment 10 | 0.32 | 0.10 | 0.60 | 0.00 9 | 0.00 2 | 0.77 | 0.16 | 1.00 | 0.03 9 | 0.05 5 | 0.017 | 0.056 | 0.0017 | 0.003 0 | 0.003 7 | 0.002 6 | 0.000 2 |
| Contrastive Example 1 | 0.40 | 1.12 | 2.26 | <0.04 | <0.03 | 1.0 | 0.8 | - | - | - | - | - | - | - | - | - | - |

Table 2 Specific Process Parameters in Embodiments 1-10

| | Slab Heatin 9 Temp. °C | Heat Prev. Time h | Rough Rolling Temp. °C | Rough Rolling Deform. Rate % | Finish Rolling Temp. °C | Finish Rolling Deform. Rate % | Cooling Way | Cooling Speed °C/s | Cease Cooling Temp. °C | Temper .Temp. °C | Heat Prev. Time min | Thickness of Steel Sheet mm |
|---|---|---|---|---|---|---|---|---|---|---|---|---|
| Embodiment 1 | 1000 | 2 | 950 | 25 | 795 | 51 | water | 25 | 300 | / | / | 25 |
| Embodiment 2 | 1120 | 2 | 1050 | 30 | 830 | 62 | water | 33 | 250 | / | / | 37 |
| Embodiment 3 | 1050 | 2 | 995 | 20 | 806 | 46 | water | 20 | 400 | / | / | 35 |
| Embodiment 4 | 1080 | 2 | 1010 | 33 | 780 | 40 | water | 40 | 170 | / | / | 20 |
| Embodiment 5 | 1100 | 2.5 | 1060 | 28 | 815 | 55 | water | 33 | 265 | / | / | 39 |
| Embodiment 6 | 1110 | 2.5 | 1080 | 41 | 880 | 66 | water | 36 | 205 | / | / | 28 |
| Embodiment 7 | 1130 | 2.5 | 1110 | 37 | 856 | 70 | water | 42 | Ambient Temp. | / | / | 35 |
| Embodiment 8 | 1140 | 3 | 1120 | 29 | 832 | 61 | water | 50 | 85 | / | / | 15 |
| Embodiment 9 | 1150 | 3 | 1130 | 35 | 841 | 59 | water | 66 | 106 | 335 | 60 | 20 |
| Embodiment 10 | 1200 | 3 | 1150 | 26 | 815 | 69 | water | 37 | 150 | / | / | 31 |

EP 2 980 256 B1

8

1. Mechanical Property Test

The high-performance low-alloy wear-resistant steel sheets in Embodiments 1-10 are tested for mechanical properties, and the results thereof are shown in Table 3.

Table 3

| | Hardness HBW | Transverse Stretch | | Charpy V-notch Longitudinal Impact Energy (-40°C), J |
|---|---|---|---|---|
| | | Tensile Strength MPa | Elongation rate % | |
| Embodiment 1 | 478 | 1480 | 14% | 85 |
| Embodiment 2 | 489 | 1515 | 14% | 81 |
| Embodiment 3 | 505 | 1555 | 14% | 78 |
| Embodiment 4 | 519 | 1580 | 14% | 75 |
| Embodiment 5 | 525 | 1610 | 14% | 71 |
| Embodiment 6 | 531 | 1640 | 14% | 69 |
| Embodiment 7 | 538 | 1660 | 13% | 68 |
| Embodiment 8 | 542 | 1695 | 13% | 65 |
| Embodiment 9 | 553 | 1730 | 13% | 60 |
| Embodiment 10 | 559 | 1750 | 13% | 53 |
| Contrastive Example 1 | About 400 (HRC43) | 1250 | 10 | - |

Seen from Table 3, the wear-resistant steel sheet in Embodiments 1-10 has a tensile strength of 1450-1800Mpa, an elongation rate of 13-14%, Brinell Hardness of 470-560HBW, and -40°C Charpy V-notch longitudinal impact energy of 50-90J, which indicates that the wear-resistant steel sheet of the present invention has not only high strength, high hardness, good elongation rate etc. but also excellent low-temperature impact toughness. The strength, hardness, and elongation rate of the steel sheet of the present invention are obviously superior to that in contrastive example 1.

2. Wear Resistance Test

The wear resistance test is performed on ML-100 abrasive wear testing machine. When cutting out a sample, the axis of the sample is perpendicular to the steel sheet surface, and the wear surface of the sample is the rolled surface of the steel sheet. The sample is machined into a step-like cylinder body with a tested part of Φ4mm and a clamped part of Φ5mm. Before testing, the sample is rinsed by alcohol, and dried by a blower, then weighted on a scale with a precision of ten thousandth. The measured weight is taken as the original weight, then it is mounted onto an elastic clamp. The test is performed by an abrasive paper with 80 grits, under an effect of a load 84N. After the test, due to the wear between the sample and the abrasive paper, a spiral line may be drawn on the abrasive paper by the sample. According to the start radius and end radius of the spiral line, the length of the spiral line is calculated out with the following formula:

$$S = \frac{\pi(r_1^2 - r_2^2)}{a}$$

wherein, r1 is the start radius of the spiral line; r2 is the end radius of the spiral line; a is the feed of the spiral line. In each test, weighting is performed for three times, and the average results are used. Then the weight loss is calculated, and the weight loss per meter indicates the wear rate of the sample (mg/M).

The wear resistance test is performed on the super-strength high-toughness low-alloy wear-resistant steel sheet in Embodiments 1-10 of the present invention. The wearing test results of the steel in these embodiments according to the present invention and the contrastive example 2 (in which a steel sheet with a hardness of 450HB is used) are shown in Table 4.

Table 4 Wearing Test Results of the Steel in Embodiments 1-10 and The Contrastive Example 2

| Steel Type | Test Temp. | Wearing Test Conditions | Wearing Rate (mg/M) |
|---|---|---|---|
| Embodiment 1 | Ambient Temp. | 80-grit abrasive paper/ 84N load | 13.033 |
| Embodiment 2 | Ambient Temp. | 80-grit abrasive paper/ 84N load | 12.801 |
| Embodiment 3 | Ambient Temp. | 80-grit abrasive paper/ 84N load | 12.567 |
| Embodiment 4 | Ambient Temp. | 80-grit abrasive paper/ 84N load | 12.316 |
| Embodiment 5 | Ambient Temp. | 80-grit abrasive paper /84N load | 12.225 |
| Embodiment 6 | Ambient Temp. | 80-grit abrasive paper/ 84N load | 12.138 |
| Embodiment 7 | Ambient Temp. | 80-grit abrasive paper/ 84N load | 12.058 |
| Embodiment 8 | Ambient Temp. | 80-grit abrasive paper/ 84N load | 11.925 |
| Embodiment 9 | Ambient Temp. | 80-grit abrasive paper/ 84N load | 11.845 |
| Embodiment 10 | Ambient Temp. | 80-grit abrasive paper/ 84N load | 11.736 |
| Contrastive example 2 | Ambient Temp. | 80-grit abrasive paper/ 84N load | 11.668 |

It is known from Table 4 that in this wearing condition, the wearing performance of the high-performance low-alloy wear-resistance according to the present invention is better than that of the contrastive example 2.

3. Welding Performance Test

According to the *Y-slit weld cracking test* (GB4675.1 -84), a Y-slit weld cracking test is performed, and five groups are tested.

First, the constrained welding seams are welded through the rich Ar gas shielding weld, by using JM-58 welding wires of Φ1.2. During the welding process, the angular deformation of the test piece is strictly controlled. After welding, they are cooled to the ambient temperature, so as to weld the tested seams. The seams are welded under the ambient temperature and 48 hours after completing the welding, the cracks on the surfaces, sections and root of the seams are detected. This detection is carried out by dissection test and staining. The welding conditions are 170A×25V×160mm/min.

The welding performance test is performed on the wear-resistant steel sheet of Embodiments 1-10 according to the present invention, and the test results are shown as Table 5.

Table 5 The Results of Welding Performance Test of Embodiments 1-10

| | Preheat Temp. | Sample No. | Surface CrackRatio, % | Root Crack Ratio, % | Section Crack Ratio, % | Ambient. Temp. | Relative Humidity |
|---|---|---|---|---|---|---|---|
| Embodiment 1 | 85°C | 1 | 0 | 0 | 0 | 25°C | 66% |
| | | 2 | 0 | 0 | 0 | | |
| | | 3 | 0 | 0 | 0 | | |
| | | 4 | 0 | 0 | 0 | | |
| | | 5 | 0 | 0 | 0 | | |
| Embodiment 2 | 93°C | 1 | 0 | 0 | 0 | 32°C | 59% |
| | | 2 | 0 | 0 | 0 | | |
| | | 3 | 0 | 0 | 0 | | |
| | | 4 | 0 | 0 | 0 | | |
| | | 5 | 0 | 0 | 0 | | |

(continued)

| | Preheat Temp. | Sample No. | Surface CrackRatio, % | Root Crack Ratio, % | Section Crack Ratio, % | Ambient. Temp. | Relative Humidity |
|---|---|---|---|---|---|---|---|
| Embodiment 3 | 105°C | 1 | 0 | 0 | 0 | 26°C | 62% |
| | | 2 | 0 | 0 | 0 | | |
| | | 3 | 0 | 0 | 0 | | |
| | | 4 | 0 | 0 | 0 | | |
| | | 5 | 0 | 0 | 0 | | |
| Embodiment 4 | 118°C | 1 | 0 | 0 | 0 | 29°C | 61% |
| | | 2 | 0 | 0 | 0 | | |
| | | 3 | 0 | 0 | 0 | | |
| | | 4 | 0 | 0 | 0 | | |
| | | 5 | 0 | 0 | 0 | | |
| Embodiment 5 | 138°C | 1 | 0 | 0 | 0 | 33°C | 66% |
| | | 2 | 0 | 0 | 0 | | |
| | | 3 | 0 | 0 | 0 | | |
| | | 4 | 0 | 0 | 0 | | |
| | | 5 | 0 | 0 | 0 | | |
| Embodiment 6 | 158°C | 1 | 0 | 0 | 0 | 29°C | 63% |
| | | 2 | 0 | 0 | 0 | | |
| | | 3 | 0 | 0 | 0 | | |
| | | 4 | 0 | 0 | 0 | | |
| | | 5 | 0 | 0 | 0 | | |
| Embodiment 7 | 169°C | 1 | 0 | 0 | 0 | 33°C | 65% |
| | | 2 | 0 | 0 | 0 | | |
| | | 3 | 0 | 0 | 0 | | |
| | | 4 | 0 | 0 | 0 | | |
| | | 5 | 0 | 0 | 0 | | |
| Embodiment 8 | 171°C | 1 | 0 | 0 | 0 | 27°C | 58% |
| | | 2 | 0 | 0 | 0 | | |
| | | 3 | 0 | 0 | 0 | | |
| | | 4 | 0 | 0 | 0 | | |
| | | 5 | 0 | 0 | 0 | | |
| Embodiment 9 | 188°C | 1 | 0 | 0 | 0 | 27°C | 61% |
| | | 2 | 0 | 0 | 0 | | |
| | | 3 | 0 | 0 | 0 | | |
| | | 4 | 0 | 0 | 0 | | |
| | | 5 | 0 | 0 | 0 | | |

(continued)

| | Preheat Temp. | Sample No. | Surface Crack Ratio, % | Root Crack Ratio, % | Section Crack Ratio, % | Ambient. Temp. | Relative Humidity |
|---|---|---|---|---|---|---|---|
| Embodiment 10 | 200°C | 1 | 0 | 0 | 0 | 30°C | 60% |
| | | 2 | 0 | 0 | 0 | | |
| | | 3 | 0 | 0 | 0 | | |
| | | 4 | 0 | 0 | 0 | | |
| | | 5 | 0 | 0 | 0 | | |

It is known from Table 5 that the wear-resistant steel sheets of Embodiments 1-10 according to the present invention presents no cracks on the surfaces after welding under a certain preheating condition, which indicates that the wear-resistant steel sheet of the present invention has good welding performance.

4. Microstructure

The microstructures are obtained by checking the wear-resistant steel sheet of Embodiment 5. As shown in Fig. 1, the microstructures are fine martensite and a trace of retained austenite, wherein the volume fraction of the retained austenite is less than or equal to 5%, which ensures that the steel sheet has excellent mechanical properties.

The present invention, under the reasonable conditions of production process, designs scientifically the compositions of carbon and alloy elements, and the ratios thereof, reducing the cost of alloys; and makes full use of TMCP processes to refine and strengthen the structures, such that the obtained wear-resistant steel sheet has high performance, such as high hardness, high strength, high elongation rate and good impact toughness etc., has excellent welding performance and wear resistance, and easy to be machined such as cut, bended, thereby having high applicability.

## Claims

1.  A high-performance low-alloy wear-resistant steel sheet consisting of, in weight percentage: C: 0.21-0.32%; Si: 0.10-0.50%; Mn: 0.60-1.60%; B: 0.0005-0.0040%; Cr: less than or equal to 1.50%; Mo: less than or equal to 0.80%; Ni: less than or equal to 1.50%; Nb: less than or equal to 0.080%; V: less than or equal to 0.080%; Ti: less than or equal to 0.060%; Al: 0.010-0.080%, Ca: 0.0010-0.0080%, N: less than or equal to 0.0080%, O: less than or equal to 0.0080%, H: less than or equal to 0.0004%, P: less than or equal to 0.015%, S: less than or equal to 0.010%, and (Cr/5+Mn/6+50B): more than or equal to 0.20% and less than or equal to 0.55%; (Mo/3+Ni/5+2Nb): more than 0.04% and less than or equal to 0.45%; (Al+Ti): more than or equal to 0.01% and less than or equal to 0.13%, the remainders being Fe and unavoidable impurities; the microstructures thereof being fine martensite and retained austenite, and the volume fraction of the retained austenite being less than or equal to 5%; the high-performance low-alloy wear-resistant steel sheet comprises a tensile strength of 1450 MPa to 1800 MPa, an elongation rate of more than 11%, Brinell Hardness of more than 450HB, and -40°C Charpy V-notch longitudinal impact energy of more than 50J.

2.  The high-performance low-alloy wear-resistant steel sheet according to Claim 1, wherein it has the chemical compositions in weight percentage: C: 0.21-0.30%; Si: 0.10-0.40%.

3.  The high-performance low-alloy wear-resistant steel sheet according to Claim 1, wherein it has the chemical compositions in weight percentage: Mn: 0.60-1.50%; B: 0.0005-0.0020%; Cr: 0.10-1.20%; and (Cr/5+Mn/6+50B): more than or equal to 0. 20% and less than or equal to 0.50%.

4.  The high-performance low-alloy wear-resistant steel sheet according to Claim 1, wherein it has the chemical compositions in weight percentage: Mo: less than or equal to 0.60%; Ni: less than or equal to 1.20%; Nb: 0.005-0.080wt%; (Mo/3+Ni/5+2Nb): more than 0.04% and less than or equal to 0.40%.

5.  The high-performance low-alloy wear-resistant steel sheet according to Claim 1, wherein it has the chemical compositions in weight percentage: V: less than or equal to 0.060%; Ca: 0.0010-0.0060%.

6. The high-performance low-alloy wear-resistant steel sheet according to Claim 1, wherein it has the chemical compositions in weight percentage: N: less than or equal to 0.0050%; O: less than or equal to 0.0050%; H: less than or equal to 0.0003%; P: less than or equal to 0.012%; S: less than or equal to 0.005%.

7. The high-performance low-alloy wear-resistant steel sheet according to Claim 1, wherein it has the chemical compositions in weight percentage: Ti: 0.005-0.060wt%; Al: 0.020-0.080%; (Al+Ti): more than or equal to 0.01% and less than or equal to 0.12%.

8. A method of manufacturing the high-performance low-alloy wear-resistant steel sheet according to any one of claims 1-7, wherein it comprises the following stages: smelting the chemical compositions as defined in any one of claims 1 to 7, casting, heating, rolling and cooling directly after rolling to obtain the high-performance low-alloy wear-resistant steel sheet, wherein in the heating stage, the slab heating temperature is 1000-1200°C, and the heat preservation time is 1-3 hours; in the stage of rolling, the rough rolling temperature is 900-1150°C, while the finish rolling temperature is 780-880°C; in the stage of cooling, the steel is water cooled to below 400°C, then air cooled to the ambient temperature, wherein the speed of water cooling is more than or equal to 20°C/s; the microstructures of the obtained high-performance low-alloy wear-resistant steel sheet are fine martensite and retained austenite, wherein the volume fraction of the retained austenite is less than or equal to 5%; the high-performance low-alloy wear-resistant steel sheet comprises a tensile strength of 1450MPa to 1800 MPa, an elongation rate of more than 11%, Brinell Hardness of more than 450HB, and -40°C Charpy V-notch longitudinal impact energy of more than 50J.

9. The method of manufacturing high-performance low-alloy wear-resistant steel sheet according to Claim 8, wherein the stage of cooling directly after rolling further includes a stage of tempering, in which the heating temperature is 100-400°C, and the heat preservation time is 30-120min

10. The method of manufacturing high-performance low-alloy wear-resistant steel sheet according to Claim 8 or 9, wherein in the stage of heating, the slab heating temperature is 1000-1150°C.

11. The method of manufacturing high-performance low-alloy wear-resistant steel sheet according to Claim 8 or 9, wherein in the stage of rolling, the rough rolling temperature is 900-1100°C, and the reduction rate in the stage of rough rolling is more than 20%, while the finish rolling temperature is 780-860°C, and the reduction rate in the stage of finish rolling is more than 40%.

12. The method of manufacturing high-performance low-alloy wear-resistant steel sheet according to Claim 8 or 9, wherein the cease cooling temperature is below 380°C, and the water cooling speed is more than or equal to 23°C/s.

13. The method of manufacturing high-performance low-alloy wear-resistant steel sheet according to Claim 9, wherein in the stage of tempering, the tempering temperature is 100-380°C, and the heat preservation time is 30-100min.

**Patentansprüche**

1. Hochleistungsniedriglegiertes verschleißfestes Stahlblech bestehend aus, in Gewichtsprozent: C: 0,21-0,32%, Si: 0,10-0,50%, Mn: 0,60-1,60%, B: 0,0005-0,0040%, Cr: weniger als oder gleich 1,50%, Mo: weniger als oder gleich 0,80%, Ni: weniger als oder gleich 1,50%, Nb: weniger als oder gleich 0,080%, V: weniger als oder gleich 0,080%, Ti: weniger als oder gleich 0,060%, Al: 0,010-0,080%, Ca: 0,0010-0,0080%, N: weniger als oder gleich 0,0080%, O: weniger als oder gleich 0,0080%, H: weniger als oder gleich 0,0004%, P: weniger als oder gleich 0,015%, S: weniger als oder gleich 0,010%, und (Cr/5+Mn/6+50B): mehr oder gleich 0,20% und weniger als oder gleich 0,55%, (Mo/3+Ni/5+2Nb): mehr als 0,04% und weniger als oder gleich 0,45%, (Al+Ti): mehr oder gleich 0,01% und weniger als oder gleich 0,13%, wobei die Reste Fe und unvermeidbare Verunreinigungen sind, wobei deren Mikrostrukturen feinkörniges Martensit und Restaustenit sind und der Volumenanteil des Restaustenit weniger als oder gleich 5% ist, wobei das hochleistungsniedriglegierte verschleißfeste Stahlblech eine Reißfestigkeit von 1450 MPa bis 1800 MPa, eine Dehnrate von mehr als 11%, eine Brinell-Härte von mehr als 450HB und eine -40°C Charpy rückseitige V-Kerbschlagenergie von mehr als 50J aufweist.

2. Hochleistungsniedriglegiertes verschleißfestes Stahlblech nach Anspruch 1, wobei es die chemischen Zusammensetzungen in Gewichtsprozent aufweist: C: 0,21-0,30%, Si: 0,10-0,40%.

3. Hochleistungsniedriglegiertes verschleißfestes Stahlblech nach Anspruch 1, wobei es die chemischen Zusammensetzungen in Gewichtsprozent aufweist: Mn: 0,60-1,50%, B: 0,0005-0,0020%, Cr: 0,10-1,20%, und (Cr/5+Mn/6+50B): mehr als oder gleich 0,20% und weniger als oder gleich 0,50%.

4. Hochleistungsniedriglegiertes verschleißfestes Stahlblech nach Anspruch 1, wobei es die chemischen Zusammensetzungen in Gewichtsprozent aufweist: Mo: weniger als oder gleich 0,60%, Ni: weniger als oder gleich 1,20%, Nb: 0,005-0,080 Gew.-%, (Mo/3+Ni/5+2Nb): mehr als 0,04% und weniger als oder gleich 0,40%.

5. Hochleistungsniedriglegiertes verschleißfestes Stahlblech nach Anspruch 1, wobei es die chemischen Zusammensetzungen in Gewichtsprozent aufweist: V: weniger als oder gleich 0,060%, Ca: 0,0010-0,0060%.

6. Hochleistungsniedriglegiertes verschleißfestes Stahlblech nach Anspruch 1, wobei es die chemischen Zusammensetzungen in Gewichtsprozent aufweist: N: weniger als oder gleich 0,0050%, O: weniger als oder gleich 0,0050%, H: weniger als oder gleich 0,0003%, P: weniger als oder gleich 0,012%, Si: weniger als oder gleich 0,005%.

7. Hochleistungsniedriglegiertes verschleißfestes Stahlblech nach Anspruch 1, wobei es die chemischen Zusammensetzungen in Gewichtsprozent aufweist: Ti: 0,005-0,060 Gew.-%, Al: 0,020-0,080%, (Al+Ti): mehr oder gleich 0,01% und weniger als oder gleich 0,12%.

8. Verfahren zur Herstellung des hochleistungsniedriglegierten verschleißfesten Stahlblechs nach einem der Ansprüche 1-7, wobei es die folgenden Stufen aufweist: Schmelzen der chemischen Zusammensetzungen wie in einem der Ansprüche 1 bis 7 definiert, Gießen, Erhitzen, Walzen und Kühlen direkt nach dem Walzen, um das hochleistungsniedriglegierte verschleißfeste Stahlblech zu erhalten, wobei während der Erhitzungsstufe die Plattenerhitzungstemperatur 1000-1200°C beträgt, und die Wärmehaltungszeit 1-3 Stunden beträgt, wobei während der Walzstufe die Rohwalztemperatur 900-1150°C beträgt, während die Endwalztemperatur 780-880°C beträgt, wobei während der Kühlungsstufe der Stahl auf unter 400°C wassergekühlt wird, dann Luft auf Umgebungstemperatur gekühlt wird, wobei die Geschwindigkeit des Wasserkühlens mehr als oder gleich 20°C/s beträgt, wobei die Mikrostrukturen des erhaltenen hochleistungsniedriglegierten verschleißfesten Stahlblechs feinkörniges Martensit und Restaustenit sind, wobei der Volumenanteil des Restaustenit weniger als oder gleich 5% ist, wobei das hochleistungsniedriglegierte verschleißfeste Stahlblech eine Reißfestigkeit von 1450 MPa bis 1800 MPa, eine Dehnrate von mehr als 11%, eine Brinell-Härte von mehr als 450HB und eine -40°C Charpy rückseitige V-Kerbschlagenergie von mehr als 50J aufweist.

9. Verfahren zur Herstellung des hochleistungsniedriglegierten verschleißfesten Stahlblechs nach Anspruch 8, wobei die Kühlungsstufe direkt nach dem Walzen weiterhin eine Temperierungsstufe aufweist, in welcher die Erhitzungstemperatur 100-400°C und die Wärmehaltungszeit 30-120 min beträgt.

10. Verfahren zur Herstellung des hochleistungsniedriglegierten verschleißfesten Stahlblechs nach Anspruch 8 oder 9, wobei während der Erhitzungsstufe die Plattenerhitzungstemperatur 1000-1150°C beträgt.

11. Verfahren zur Herstellung des hochleistungsniedriglegierten verschleißfesten Stahlblechs nach Anspruch 8 oder 9, wobei in dem Walzschritt die Rohwalztemperatur 900-1100°C beträgt und die Reduktionsrate in dem Rohwalzschritt mehr als 20% beträgt, während die Endwalztemperatur 780-860°C beträgt und die Reduktionsrate in der Endwalzstufe mehr als 40% beträgt.

12. Verfahren zur Herstellung des hochleistungsniedriglegierten verschleißfesten Stahlblechs nach Anspruch 8 oder 9, wobei die Einstellkühltemperatur unter 380°C liegt, und die Wasserkühlgeschwindigkeit mehr als oder gleich 23°C/s beträgt.

13. Verfahren zur Herstellung des hochleistungsniedriglegierten verschleißfesten Stahlblechs nach Anspruch 9, wobei in der Temperierungsstufe die Temperierungstemperatur 100-380°C beträgt und die Wärmehaltungszeit 30-100 min beträgt.

**Revendications**

1. Tôle d'acier haute performance, faiblement allié et résistant à l'usure, constitué, en pourcentage en poids, de : C : 0,21 à 0,32% ; Si : 0,10 à 0,50 % ; Mn : 0,60 à 1,60% ; B : 0,0005 à 0,0040% ; Cr : au plus 1,50 % ; Mo : au plus 0,80 % ; Ni : au plus 1,50 % ; Nb : au plus 0,080 % ; V : au plus 0,080 % ; Ti : au plus 0,060 % ; Al : 0,010 à 0,080 %, Ca : 0,0010 à 0,0080 %, N : au plus 0,0080 %, O : au plus 0,0080 %, H : au plus 0,0004 %, P : au plus 0,015 % ; S : au plus 0,010 %, et (Cr/5+Mn/6+50B) : au moins 0,20% et au plus 0,55 % ; (Mo/3+Ni/5+2Nb) : plus de 0,04 % et au plus 0,45 % ; (Al+Ti) : au moins 0,01 % et au plus 0,13 %, les restes étant du Fe et des impuretés inévitables ; ses microstructures étant de la martensite fine et de l'austénite retenue, et la fraction volumique de l'austénite retenue étant d'au plus 5 % ; la tôle d'acier haute performance faiblement allié résistant à l'usure comprend une résistance à la traction de 1450 MPa à 1800 MPa, un taux d'allongement de plus de 11%, une dureté Brinell de plus de 450HB et une énergie d'impact longitudinale Charpy avec entaille en V à -40°C de plus de 50J.

2. Tôle d'acier haute performance, faiblement allié et résistant à l'usure selon la revendication 1, dans laquelle elle a les compositions chimiques en pourcentage en poids : C : 0,21 à 0,30 % ; Si : 0,10 à 0,40 %.

3. Tôle d'acier haute performance, faiblement allié et résistant à l'usure selon la revendication 1, dans laquelle elle a les compositions chimiques en pourcentage en poids : Mn : 0,60 à 1,50 % ; B : 0,0005 à 0,0020 % ; Cr : 0,10 à 1,20 %; et (Cr/5+Mn/6+50B) : au moins 0,20 % et au plus 0,50 %.

4. Tôle d'acier haute performance, faiblement allié et résistant à l'usure selon la revendication 1, dans laquelle elle a les compositions chimiques en pourcentage en poids : Mo : au plus 0,60 % ; Ni : au plus 1,20 %; Nb : 0,005 à 0,080 % en poids ; (Mo/3+Ni/5+2Nb) : plus de 0,04 % et au plus 0,40 %.

5. Tôle d'acier haute performance, faiblement allié et résistant à l'usure selon la revendication 1, dans laquelle elle a les compositions chimiques en pourcentage en poids : V : au plus 0,060 % ; Ca : 0,0010 à 0,0060 %.

6. Tôle d'acier haute performance, faiblement allié et résistant à l'usure selon la revendication 1, dans laquelle elle a les compositions chimiques en pourcentage en poids : N : au plus 0,0050 % ; O : au plus 0,0050 % ; H : au plus 0,0003 % ; P : au plus 0,012 % ; S : au plus 0,005 %.

7. Tôle d'acier haute performance, faiblement allié et résistant à l'usure selon la revendication 1, dans laquelle elle a les compositions chimiques en pourcentage en poids : Ti : 0,005 à 0,060 % en poids ; Al : 0,020 à 0,080 % en poids ; (Al+Ti) : au moins 0,01 % et au plus 0,12 %.

8. Procédé de fabrication de la tôle d'acier haute performance, faiblement allié et résistant à l'usure selon l'une quelconque des revendications 1 à 7, dans lequel il comprend les étapes suivantes : fusion des compositions chimiques telles que définies dans l'une quelconque des revendications 1 à 7, coulage, chauffage, laminage et refroidissement directement après le laminage pour obtenir la tôle d'acier haute performance, faiblement allié et résistant à l'usure, dans lequel à l'étape de chauffage, la température de chauffage de plaque est de 1000 à 1200°C, et le temps de conservation de chaleur est de 1 à 3 heures ; à l'étape de laminage, la température de laminage grossier est de 900 à 1150°C, tandis que la température de laminage de finition est de 780 à 880°C ; à l'étape de refroidissement, l'acier est refroidi à l'eau en dessous de 400°C, puis refroidi à l'air jusqu'à la température ambiante, dans lequel la vitesse de refroidissement à l'eau est supérieure ou égale à 20°C/s ; les microstructures de la tôle d'acier haute performance, faiblement allié et résistant à l'usure obtenue sont de la martensite fine et de l'austénite retenue, dans lequel la fraction volumique de l'austénite retenue est inférieure ou égale à 5 % ; la tôle d'acier haute performance, faiblement allié et résistant à l'usure comprend une résistance à la traction de 1450MPa à 1800 MPa, un taux d'allongement de plus de 11%, une dureté Brinell de plus de 450HB et une énergie d'impact longitudinale Charpy avec entaille en V à -40°C de plus de 50J.

9. Procédé de fabrication de tôle d'acier haute performance, faiblement allié et résistant à l'usure selon la revendication 8, dans lequel l'étape de refroidissement directement après le laminage comprend en outre une étape de trempe, dans laquelle la température de chauffage est de 100 à 400°C, et le temps de conservation de chaleur est de 30 à 120 min.

10. Procédé de fabrication de tôle d'acier haute performance, faiblement allié et résistant à l'usure selon la revendication 8 ou 9, dans laquelle à l'étape de chauffage, la température de chauffage de plaque est de 1000 à 1150°C.

11. Procédé de fabrication de tôle d'acier haute performance, faiblement allié et résistant à l'usure selon la revendication 8 ou 9, dans lequel à l'étape de laminage, la température de laminage grossier est de 900 à 1100°C, et le taux de réduction à l'étape de laminage grossier est supérieur à 20 %, tandis que la température de laminage de finition est de 780 à 860°C, et le taux de réduction à l'étape de laminage de finition est supérieur à 40 %.

**12.** Procédé de fabrication de tôle d'acier haute performance, faiblement allié et résistant à l'usure selon la revendication 8 ou 9, dans lequel la température de refroidissement d'arrêt est inférieure à 380°C, et la vitesse de refroidissement à l'eau est d'au moins 23°C/s.

**13.** Procédé de fabrication de tôle d'acier haute performance, faiblement allié et résistant à l'usure selon la revendication 9, dans lequel à l'étape de trempe, la température de trempe est de 100 à 380°C, et le temps de conservation de chaleur est de 30 à 100 min.

**Fig. 1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 1140205 A
- CN 1865481 A
- JP 2012036501 A
- JP 2009030094 A
- CN 102876969 A
- CN 102747280
- GB 4675184 A